# EUROPÄISCHE PATENTSCHRIFT

(11) **EP 2 670 040 B1**
(45) Veröffentlichungstag und Bekanntmachung des Hinweises auf die Patenterteilung: **21.01.2015**
(21) Anmeldenummer: 12170482.9
(22) Anmeldetag: 01.06.2012
(51) Int. Cl.: H02M 7/48, H02J 3/26

(54) **Stromversorgungsanordnung mit einem Wechselrichter zur Erzeugung von einphasigem Wechselstrom**
Power supply assembly with an inverter for creating single phase alternating current
Agencement d'alimentation électrique avec un onduleur pour la génération de courant alternatif monophasé

(43) Veröffentlichungstag der Anmeldung: 04.12.2013
(73) Patentinhaber: AEG Power Solutions GmbH, 59581 Warstein-Belecke (DE)
(72) Erfinder: Averberg, Andreas, Dr. Ing., 53115 Bonn (DE)
(74) Vertreter: Graefe, Jörg

(56) Entgegenhaltungen:
- EP-A1- 2 346 150
- DE-B- 1 204 321
- DE-C- 643 056
- US-A- 1 509 941
- US-A- 2 758 144

## Beschreibung

Die vorliegende Erfindung betrifft eine Stromversorgungsanordnung mit einem Wechselrichter zur Erzeugung von einphasigem Wechselstrom und einem Transformator mit einer Primärwicklung und einer ersten Sekundärwicklung und einer zweiten Sekundärwicklung, wobei die Sekundärwicklungen gleiche Windungszahlen haben und so angeordnet sind, dass sie im Betrieb des Transformators vom gleichen magnetischen Fluss durchflutet werden, so dass an den Sekundärwicklungen im Betrieb des Transformators gleiche Spannungen abgreifbar sind, wobei je ein Anschluss der ersten Sekundärwicklung und ein Anschluss der zweiten Sekundärwicklung an einem ersten Punkt miteinander verbunden sind, dass sich zwischen dem ersten Punkt, einem weiteren Anschluss der ersten Sekundärwicklung und einem weiteren Anschluss der zweiten Sekundärwicklung ein Zweiphasensystem ergibt, dessen Phasen um 180° zu einander verschoben sind.

Aus dem Dokument EP 2 346 150 A1 ist eine solche Stromversorgungsanordnung bekannt (siehe dort Fig. 1b). Aus dem gleichen Dokument ist es bekannt, diese erste Stromversorgungsanordnung zur Versorgung von Siliciumstäben zur Herstellung von Polysilicium nach dem Siemensverfahren einzusetzen. Die in dem genannten Dokument EP 2 346 150 A1, Figur 1b dargestellten Stromversorgungsanordnungen haben je zwei Ausgänge, an denen um 180° zueinander verschobene, d.h. gegenphasige Spannungen zur Verfügung gestellt werden. Diese Spannungen treiben mittelfrequente Ströme mit einer Frequenz zwischen 1 und 1000 kHz in die Siliziumstäbe. Die gegenphasigen Spannungen werden durch zwei Transformatoren hergestellt, die jeweils eine Primärwicklung und zwei Sekundärwicklungen aufweisen.

Die Sekundärwicklungen sind an einem ersten Knoten miteinander verbunden. Die ersten Knoten sind jeweils mit einem Neutralleiteranschluss der Ausgänge der Stromversorgungsanordnungen verbunden. Weitere Anschlüsse der Sekundärwicklungen sind mit Außenleiteranschluss in der Ausgänge verbunden.

Neben der Stromversorgung durch die ersten Stromversorgungsanordnungen können die Siliziumstäbe , wie es in dem Dokument EP 2 346 150 A1 beschrieben ist, gleichzeitig zur Versorgung mit den ersten Stromversorgungsanordnungen von einer zweiten Stromversorgungsanordnung versorgt werden. An dieser zweiten Stromversorgungsanordnung sind die Siliciumstäbe in Reihe geschaltet angeschlossen. Diese Stromversorgung erfolgt mit einem Strom mit einer Frequenz von etwa 50 Hz.

In dem Dokument EP 2 346 150 A1 ist offenbart, dass die erste Stromversorgungsanordnung und die zweite Stromversorgungsanordnung durch Kondensatoren voneinander entkoppelt werden. Dazu sind zwischen den Außenleiteranschluss der Ausgänge und den weiteren Anschlüssen der Sekundärwicklungen der Transformatoren Kondensatoren eingesetzt. Diese bilden zusammen mit weiteren Bauelementen Hochpässe, welche verhindern, dass von der zweiten Stromversorgungsanordnung getriebener Strom in die ersten Stromversorgungsanordnungen hinein fließt und diese beschädigt oder zerstört. Umgekehrt ist die zweite Stromversorgungsanordnung dadurch von den ersten Stromversorgungsanordnungen entkoppelt, da die Spannung an einem Ausgang einer ersten Stromversorgungsanordnung durch die gegenphasige Spannung an dem anderen Ausgang der gleichen ersten Stromversorgungsanordnung aufgehoben wird.

In der Praxis können allerdings dann Probleme auftauchen, wenn die Lasten an den Ausgängen einer ersten Stromversorgungsanordnung nicht gleichgroß sind. Insbesondere wenn die Induktivität der einen Last größer ist als die Induktivität der anderen Last, können sich zum Teil recht erhebliche Unterschiede in den Beträgen der an den Ausgängen der ersten Stromversorgungsanordnungen zur Verfügung gestellten Spannungen ergeben. Dieses führte dazu, dass diese Summe der Spannungen über den Ausgängen der ersten Stromversorgungsanordnung nicht mehr 0 V beträgt. Stattdessen werden Beträge von mehreren 100 V erreicht. Die Spannung, die erreicht wird, kann dabei von der Frequenz abhängen, mit welcher die erste Stromversorgungsanordnung betrieben wird.

Diese ungleichmäßige Belastung der ersten Stromversorgungsanordnung und die sich daraus ergebende Spannung über den in Reihe geschalteten Ausgängen der ersten Stromversorgungsanordnung kann dazu führen, dass die zweite Stromversorgungsanordnung beschädigt oder zerstört wird.

Der Erfindung liegt daher die Aufgabe zu Grunde, eine erste Stromversorgungsanordnung so fortzubilden, dass Unterschiede zwischen den Beträgen der Spannungen an den Ausgängen einer eingangs genannten ersten Stromversorgungsanordnung so weit wie möglich vermieden werden.

Diese Aufgabe wird erfindungsgemäß dadurch gelöst, dass in Reihe zu der Primärwicklung des Transformators oder zwischen dem ersten Knoten und dem Neutralleiteranschluss eines Ausgangs der Stromversorgungsanordnung ein Kondensator angeordnet ist.

Der den ersten Knoten mit dem Neutralleiteranschluss verbindende Kondensator oder der in Reihe zu der Primärwicklung liegende Kondensator ist im Betrieb der Stromversorgungsanordnung unmittelbar oder mittelbar, d.h. unter Zwischenschaltung des Transformators, sowohl im Stromkreis mit der ersten Sekundärwicklung als auch im Stromkreis der zweiten Sekundärwicklung der Stromversorgungsanordnung. Dadurch kann der Kondensator für einen Ausgleich des betragsmäßigen Unterschiedes zwischen den Spannungen an den Ausgängen der Stromversorgungsanordnung sorgen. Der Kondensator, insbesondere wenn er sekundärseitig angeordnet ist, kann eine Kapazität von 2 bis 10 µF, insbesondere von 4,5 µF haben.

Die Gleichwertigkeit der Anordnung des Kondensators in Reihe zur Primärwicklung des Transformators einerseits und zwischen dem ersten Knoten und dem Neutralleiteranschluss andererseits wird deutlich, wenn man den Transformator gedanklich durch eine Ersatzschaltung ersetzt. Dann wird einem Fachmann deutlich, dass auch der primärseitig angeordnete Kondensator in beiden Lastkreisen wirkt.

Der weitere Anschluss der ersten Sekundärwicklung ist vorzugsweise mit einem ersten Außenleiteranschluss und der weitere Anschluss der zweiten Sekundärwicklung mit einem zweiten Außenleiteranschluss verbunden. Durch die Erfindung wird dafür gesorgt werden, dass die Spannung zwischen den Außenleiteranschlüssen gegenüber dem Zustand beim Stand der Technik erheblich reduziert wird.

Denkbar ist beispielsweise, dass die Außenleiteranschlüsse unmittelbar mit den weiteren Anschlüssen der Sekundärwicklungen verbunden sind. Dann ist es möglich, dass auch bei ungleicher Belastung der Ausgänge der Stromversorgungsanordnung, insbesondere bei ohmsch-induktiver Belastung mit ungleichen induktiven Anteilen der Belastung, die Spannung zwischen den Außenleiteranschlüssen 0 V oder annähernd 0 V beträgt.

Denkbar ist aber auch, dass die Außenleiteranschlüsse über Kondensatoren mit den weiteren Anschlüssen der Sekundärwicklungen verbunden sind. Auch dann kann die Spannung zwischen den Außenleitern bei ungleicher Belastung der Ausgänge der Stromversorgungsanordnung reduziert werden. Die Reduzierung ist jedoch dann nicht so deutlich wie im Falle des Verzichts auf diese Kondensatoren an den Außenleiteranschlüssen.

Die Aufgabe kann erfindungsgemäß ebenso dadurch gelöst werden, dass die Spannung über wenigstens eine der Sekundärwicklungen diskret oder kontinuierlich einstellbar ist. Eine diskrete Einstellbarkeit der Spannung kann dadurch erreicht werden, dass wenigstens eine der Sekundärwicklungen mehrere Anzapfungen hat. Ist die Spannung über wenigstens eine der Sekundärwicklungen einstellbar, kann sie so verändert werden, dass die Spannungen über den an die erfindungsgemäße Stromversorgungsanordnung angeschlossenen Lasten betragsmäßig gleich ist.

Eine weitere erfindungsgemäße Lösung besteht darin, dass zwischen den weiteren Anschlüssen der Sekundärwicklungen und Außenleiteranschlüssen des Ausgangs Kondensatoren vorgesehen sind, von denen zumindest einer eine einstellbare Kapazität hat. Auch mit einem solchen einstellbaren Kondensator könnte erreicht werden, dass die Spannungen über den an die erfindungsgemäße Stromversorgungsanordnung angeschlossenen Lasten betragsmäßig gleich ist.

Der Wechselrichter kann eine H-Brücke mit Leistungstransistoren sein.

Die Stromversorgungseinrichtung kann einen Frequenzumrichter umfassen und der Wechselrichter kann Teil des Frequenzumrichters sein. Neben dem Wechselrichter kann der Frequenzumrichter einen Gleichrichter und einen Gleichspannungszwischenkreis umfassen.

Der Frequenzumrichter kann alternativ auch ein Direktumrichter sein. Der Wechselrichter im Sinne dieser Anmeldung ist dann integraler Bestandteil des Direktumrichters.

Die erfindungsgemäße Stromversorgungsanordung kann Teil eines Reaktors zur Herstellung von Polysilicium nach dem Siemensverfahren sein. Die erfindungsgemäße Stromversorgungsanordnung kann eine erste Stromversorgungsanordnung zur Versorgung von Siliciumstäben oder -dünnstäben mit Wechselstrom zur induktiven Erhitzung sein. Die Siliciumstäbe oder -dünnstäbe können in einem Reaktorbehälter angeordnet werden. In dem Reaktorbehälter sind Halterungen vorgesehen, mit welchen die Siliziumstäbe oder Siliziumdünnstäbe gehalten werden. Die Halterungen sind zugleich elektrische Anschlüsse, mit welchen die Siliciumstäbe oder Siliciumdünnstäbe in den Lastkreis eingebunden werden.

Der Reaktor kann eine zweite Stromversorgungsanordnung zur Versorgung der Siliciumstäbe oder -dünnstäbe mit Wechselstrom zur induktiven Erhitzung aufweisen. Diese zweite Stromversorgungsanordnung kann einen Transformator mit mehreren sekundärseitigen Anzapfungen und daran angeschlossenen Leistungsstellern aufweisen, die in Spannungsfolgesteuerung betrieben werden und mit einem Außenleiteranschluss der zweiten Stromversorgungsanordnung verbunden werden, wie es zum Beispiel auch in dem Dokument EP 2 346 150 A1 offenbart ist. Eine Frequenz des von der ersten Stromversorgungsanordnung erzeugbaren Wechselstroms beträgt zwischen 1 bis 1000 kHz und eine Frequenz des von der zweiten Stromversorgungsanordnung erzeugbaren Wechselstrom beträgt 10 bis 100 Hz.

Weitere Merkmale der Erfindung werden anhand der nachfolgenden Beschreibung bevorzugter Ausführungsbeispiele unter Bezugnahme auf die beiliegenden Abbildungen deutlich. Darin zeigen
- Fig. 1: ein Schaltbild einer Stromversorgungsanordnung gemäß dem Stand der Technik,
- Fig. 2: ein Schaltbild einer ersten erfindungsgemäßen Stromversorgungsanordnung und
- Fig. 3: ein Schaltbild einer zweiten erfindungsgemäßen Stromversorgungsanordnung.

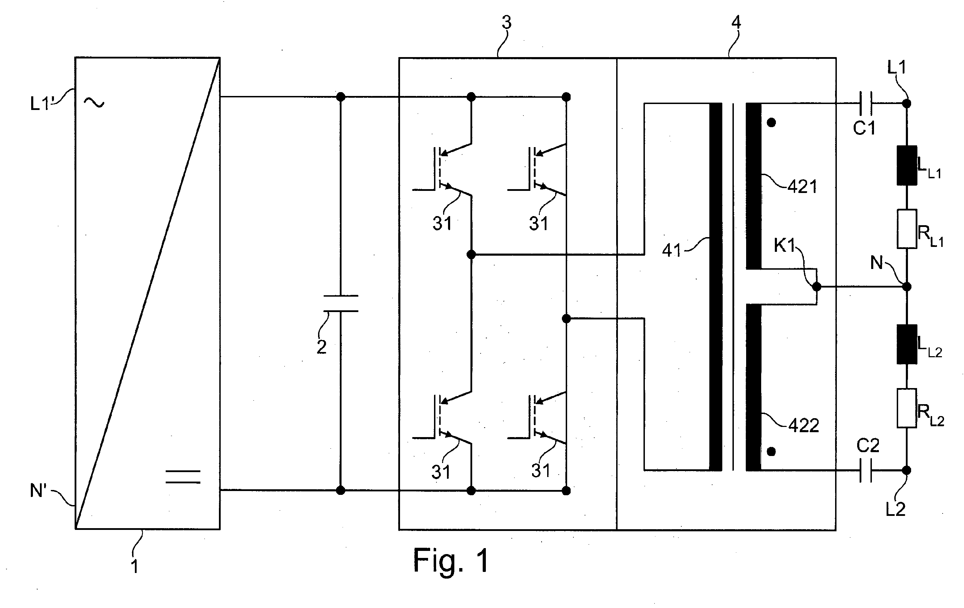

Die in Fig. 1 dargestellte Stromversorgungsanordnung gemäß dem Stand der Technik umfasst einen Frequenzumrichter mit einem Gleichrichter 1 , einen Gleichstromzwischenkreis 2 und einem Wechselrichter 3.

Der Gleichrichter 1 ist an einen Außenleiter L1'und einen Neutralleiter N' eines Versorgungswerkes angeschlossen. An den Ausgang des Gleichrichters ist ein Kondensator angeschlossen, der den Gleichspannungszwischenkreis 2 bildet. An den Gleichspannungszwischenkreis 2 ist der Wechselrichter 2 angeschlossen.

Beim Wechselrichter 3 handelt es sich es sich um eine H-Brücke aus IGBTs 31, wie sie bei Wechselrichtern vielfach verbreitet ist. Anstellte von IGBTs können auch andere steuerbaren Schalter verwendet werden. In den Querzweig der H-Brücke ist eine Primärwicklung 41 eines Transformators 4 angeschlossen. Sekundärseitig weist der Transformator 4 zwei Wicklungen 421, 422 auf. Die beiden Sekundärwicklungen sind auf einem Kern angeordnet und werden von dem gleichen magnetischen Fluss durchflutet. Die Sekundärwicklungen 421, 422 haben die gleiche Wicklungszahl, sind aber gegensinnig gewickelt.

Je ein Anschluss der einen Sekundärwicklung wie der anderen Sekundärwicklung sind an einem Punkt K1 zusammengeführt. Von diesem Knoten ist eine elektrische Verbindung mit einem Neutralleiteranschluss N auf einer Ausgangsseite der Stromversorgungsanordnung hergestellt.

Ein weiterer Anschluss jeder der Sekundärwicklungen 421, 422 ist über einen Kondensatoren C1, C2 mit einem Außenteiteranschluss L1, L2 auf der Ausgangsseite der Stromversorgungsanordnung verbunden.

Die Stromversorgungsanordnung stellt an ihren Ausgängen L1, N und L2, N zwei gegenphasige Spannungen zur Verfügung, die im Leerlauf und bei symmetrischer Belastung der Ausgänge L1, N, L2, N einen gleichen Betrag haben. Die Spannung zwischen den Außenleiteranschlüssen L1, L2 beträgt dann 0 V.

Durch eine unsymmetrische Belastung der Ausgänge kann es sich ergeben, dass die Beträge an den beiden Ausgängen L1, N, L2, N unterschiedlich groß sind. Die Spannung zwischen den Außenleiteranschlüssen L1, L2 ist dann nicht 0 V. Die Abweichung kann je nach Frequenz der Wechselspannungen an den Ausgängen und je nach Art der Belastung in einer Größenordnung liegen, die für eine Einbindung der Stromversorgungsanlage in eine größere Anlage problematisch ist. Insbesondere bei unterschiedlicher induktiver Belastung können im Betrieb der Stromversorgungsanordnung die Wechselspannungen auseinanderlaufen. Besonders im Fall des Betriebs der Stromversorgungsanordnung zur Bereitstellung von Wechselspannungen mit Frequenzen, die nahe der Resonanzfrequenzen der Ausgangstromkreise umfassend die Sekundärspule 421, den Kondensator C1, die Last RL1 , LL1 beziehungsweise die Sekundärspule 422, den Kondensator C2, die Last RL2, LL2 liegen,kann es zu hohen Spannungen zwischen den Außenleiteranschlüssen L1 und L2 kommen.

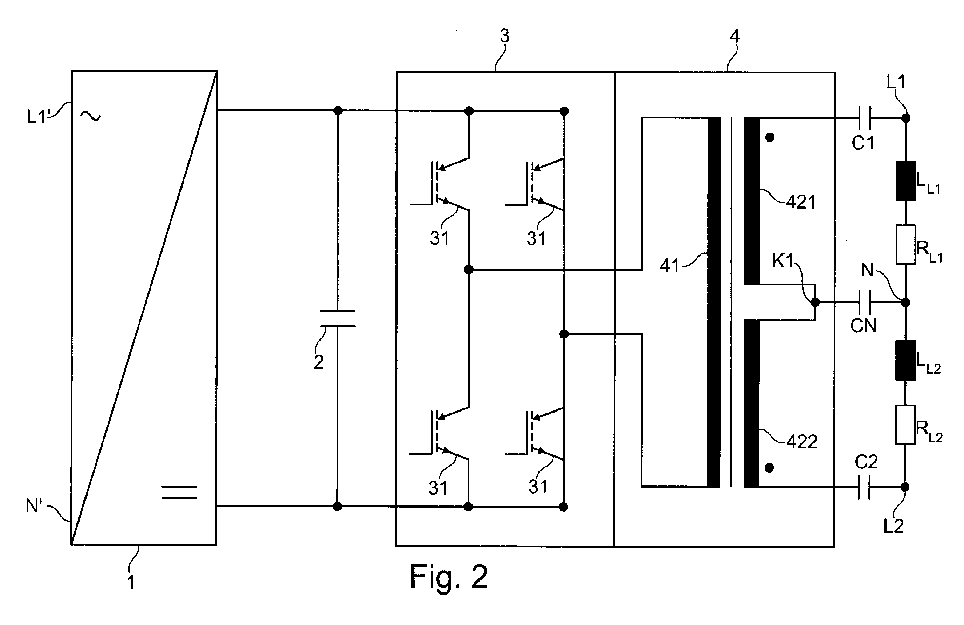

Diese Spannungen können erheblich gemindert werden, wenn, wie bei der ersten erfindungsgemäßen Stromversorgungsanordnung gemäß Fig. 2, die im übrigen der Stromversorgungsanordnung gemäß Fig. 1 entspricht, in die Verbindung zwischen dem Punkt K1 und dem Neutralleiteranschluss N ein Kondensator CN eingeschaltet ist.

Durch den Kondensator CN kommt es zu einer Kopplung der Ausgangsstromkreise, was zu einer Reduzierung der Spannung zwischen den Außenleiteranschlüssen L1, L2 führt. Die Spannungen an den Ausgängen L1, N, L2, N werden gegenüber den anhand Fig. 1 beschriebenen Fällen unsymmetrischer Belastung angeglichen. Die Spannungen können um bis ca. 80% reduziert werden.

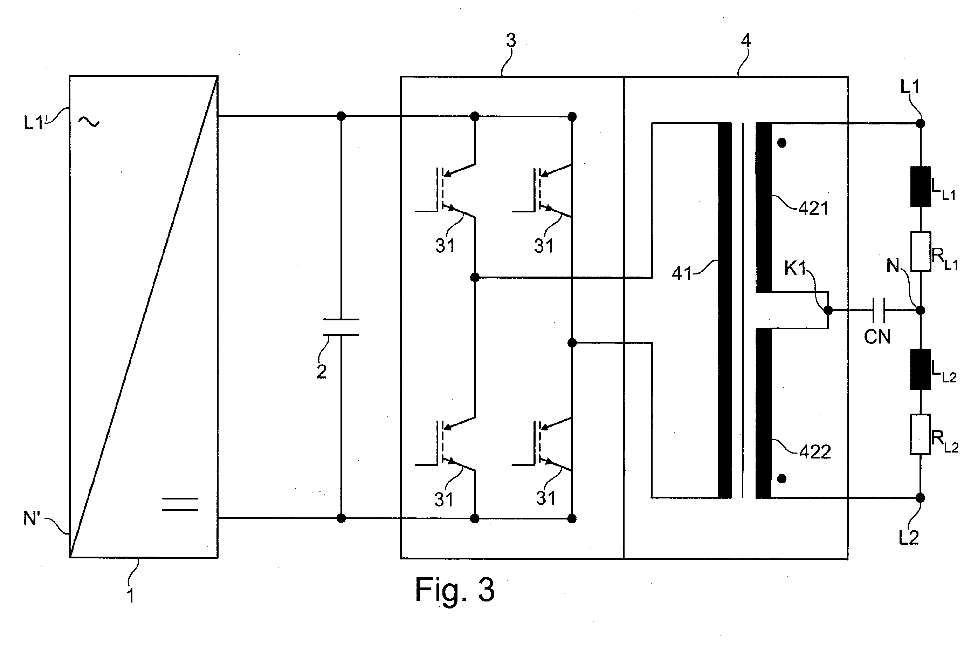

Eine fast 100%-ige Reduzierung der Spannung zwischen den Außenleitern im Fall einer unsymmetrischen, insbesondere einer unsymmetrischen ohmsch-induktiven Belastung der Ausgänge L1, N, L2, N kann erreicht werden, wenn die Kondensatoren C1 und C2 in den Verbindungen zwischen den weiteren Anschlüssen der Sekundärwicklungen 421, 422 des Transformators 4 und den Außenleiteranschlüssen L1, L2 durch leitende Verbindungen ersetzt werden und nur der Kondensator CN zwischen dem ersten Punkt K1 und dem Neutralleiteranschluss vorgesehen ist, wie es in Fig. 3 für die zweite erfindungsgemäße Schaltungsanordnung dargestellt ist, welche im übrigen der ersten erfindungsgemäßen Schaltungsanordnung gemäß Fig. 2 entspricht.

## Patentansprüche

1. Stromversorgungsanordnung mit einem Wechselrichter (3) zur Erzeugung von einphasigem Wechselstrom und einem Transformator (4) mit einer Primärwicklung (41) und einer ersten Sekundärwicklung (421) und einer zweiten Sekundärwicklung (422), wobei die Sekundärwicklungen (421, 422) gleiche Windungszahlen haben und so angeordnet sind, dass sie im Betrieb des Transformators (4) vom gleichen magnetischen Fluss durchflutet werden, so dass an den Sekundärwicklungen (421, 422) im Betrieb des Transformators (4) gleiche Spannungen abgreifbar sind, wobei je ein Anschluss der erste Sekundärwicklung (421) und ein Anschluss der zweiten Sekundärwicklung (422) an einem ersten Punkt (K1) miteinander verbunden sind, dass sich zwischen dem ersten Punkt (K1), einem weiteren Anschluss der ersten Sekundärwicklung (421) und einem weiteren Anschluss der zweiten Sekundärwicklung (422) ein Zweiphasensystem ergibt, dessen Phasen um 180° zu einander verschoben sind,
**dadurch gekennzeichnet,**
- **dass** der erste Punkt (K1) mit einem Neutralleiteranschluss (N) eines Ausgangs der Stromversorgungsanordnung über einen Kondensator verbunden ist,
- **dass** in Reihe zu der Primärwicklung des Transformators ein Kondensator angeordnet ist,
- **dass** die Spannung über wenigstens eine der Sekundärwicklungen diskret oder kontinuierlich einstellbar ist und/oder
- zwischen den weiteren Anschlüssen der Sekundärwicklungen und Außenleiteranschlüssen des Ausgangs Kondensatoren vorgesehen sind, von denen zumindest einer eine einstellbare Kapazität hat.

2. Stromversorgungsanordnung nach Anspruch 1 , **dadurch gekennzeichnet, dass** der weitere Anschluss der ersten Sekundärwicklung (421) mit einem ersten Außenleiteranschluss (L1) und der weitere Anschluss der zweiten Sekundärwicklung (422) mit einem zweiten Außenleiteranschluss (L2) verbunden ist.

3. Stromversorgungsanordnung nach Anspruch 2, **dadurch gekennzeichnet, dass** zwischen dem weiteren Anschluss der ersten Sekundärwicklung (421) und dem ersten Außenleiteranschluss (L1) ein Kondensator (C1) geschaltet ist und dass zwischen den weiteren Anschluss der zweiten Sekundärwicklung (422) und dem zweiten Außenleiteranschluss (L2) ein Kondensator (C2) geschaltet ist.

4. Stromversorgungsanordnung nach einem der Ansprüche 1 bis 3, **dadurch gekennzeichnet, dass** der Wechselrichter (3) eine H-Brücke mit Leistungstransistoren (31) ist.

5. Stromversorgungsanordnung nach einem der Ansprüche 1 bis 4, **dadurch gekennzeichnet, dass** die Stromversorgungseinrichtung einen Frequenzumrichter (1 , 2, 3) umfasst und dass der Wechselrichter (3) Teil des Frequenzumrichters (1 , 2, 3) ist.

6. Reaktor zur Herstellung von Polysilicium nach dem Siemensverfahren mit einer ersten Stromversorgungsanordnung zur Versorgung von Siliciumstäben oder -dünnstäben, die in einem Reaktorbehälter angeordnet werden können, mit Wechselstrom zur induktiven Erhitzung, **dadurch gekennzeichnet, dass** die erste Stromversorgungsanordnung eine Stromversorgungsanordnung nach einem der Ansprüche 1 bis 5 ist.

7. Reaktor nach Anspruch 6, **dadurch gekennzeichnet, dass** der Reaktor eine zweite Stromversorgungsanordnung zur Versorgung der Siliciumstäbe oder -dünnstäbe mit Wechselstrom zur induktiven Erhitzung aufweist, wobei eine Frequenz des von der ersten Stromversorgungsanordnung erzeugbaren Wechselstroms 10 bis 1000 kHz beträgt und eine Frequenz des von der zweiten Stromversorgungsanordnung erzeugbaren Wechselstroms 10 bis 100 Hz beträgt.

## Claims

1. Power supply arrangement comprising an inverter (3) for generating single-phase alternating current and a transformer (4) having a primary winding (41) and a first secondary winding (421) and a second secondary winding (422), wherein the secondary windings (421, 422) have the same turns numbers and are arranged in such a way that, during operation of the transformer (4), the same magnetic flux permeates through said secondary windings, with the result that the same voltages can be tapped off at the secondary windings (421, 422) during operation of the transformer (4), wherein in each case one connection of the first secondary winding (421) and one connection of the second secondary winding (422) are connected to one another at a first point (K1), and a two-phase system results between the first point (K1), a further connection of the first secondary winding (421) and a further connection of the second secondary winding (422), the phases of said two-phase system being shifted through 180° with respect to one another,
**characterized**
- **in that** the first point (K1) is connected to a neutral conductor connection (N) of an output of the power supply arrangement via a capacitor,
- **in that** a capacitor is arranged in series with the primary winding of the transformer,
- **in that** the voltage across at least one of the secondary windings is discretely or continuously adjustable and/or
- capacitors are provided between the further connections of the secondary windings and line conductor of the output, of which capacitors at least one has an adjustable capacitance.

2. Power supply arrangement according to Claim 1, **characterized in that** the further connection of the first secondary winding (421) is connected to a first line conductor (L1), and the further connection of the second secondary winding (422) is connected to a second line conductor (L2).

3. Power supply arrangement according to Claim 2, **characterized in that** a capacitor (C1) is connected between the further connection of the first secondary winding (421) and the first line conductor (L1), and **in that** a capacitor (C2) is connected between the further connection of the second secondary winding (422) and the second line conductor (L2).

4. Power supply arrangement according to one of Claims 1 to 3, **characterized in that** the inverter (3) is an H bridge comprising power transistors (31).

5. Power supply arrangement according to one of Claims 1 to 4, **characterized in that** the power supply device comprises a frequency converter (1, 2, 3), and **in that** the inverter (3) is part of the frequency converter (1, 2, 3).

6. Reactor for producing polysilicon in accordance with the Siemens method comprising a first power supply arrangement for supplying alternating current to silicon rods or thin silicon rods, which can be arranged in a reactor vessel, for inductive heating, **characterized in that** the first power supply arrangement is a power supply arrangement according to one of Claims 1 to 5.

7. Reactor according to Claim 6, **characterized in that** the reactor has a second power supply arrangement for supplying alternating current to the silicon rods or thin silicon rods for inductive heating, wherein a frequency of the alternating current which can be generated by the first power supply arrangement is 10 to 1000 kHz, and a frequency of the alternating current which can be generated by the second power supply arrangement is 10 to 100 Hz.

## Revendications

1. Dispositif d'alimentation électrique comportant un onduleur (3) destiné à générer un courant alternatif monophasé et un transformateur (4) comportant un enroulement primaire (41) et un premier enroulement secondaire (421) et un second enroulement secondaire (422), dans lequel les enroulements secondaires (421, 422) présentent les mêmes nombres de spires et sont agencés de telle manière qu'ils soient traversés par des flux magnétiques identiques lors du fonctionnement du transformateur (4) de manière à ce que des tensions identiques puissent être prélevées sur les enroulements secondaires (421, 422) lors du fonctionnement du transformateur (4), dans lequel une borne du premier enroulement secondaire (421) et une borne du second enroulement secondaire (422) sont chacune connectées l'une à l'autre en un premier point (K1), et à ce qu'un système biphasé dont les phases sont décalées l'une par rapport à l'autre de 180° soit formé entre le premier point (K1), une autre borne du premier enroulement secondaire (421) et une autre borne du second enroulement secondaire (422),
**caractérisé en ce que**
- le premier point K1 est connecté à une borne de conducteur neutre (N) d'une sortie du dispositif d'alimentation électrique par l'intermédiaire d'un condensateur,
- un condensateur est disposé en série par rapport à l'enroulement primaire du transformateur,
- la tension peut être réglée de manière discrète ou continue par l'intermédiaire d'au moins l'un des enroulements secondaires et/ou
- des condensateurs sont prévus entre les autres bornes des enroulements secondaires et des bornes de conducteurs de ligne de la sortie, dont au moins l'un présente une capacité réglable.

2. Dispositif d'alimentation électrique selon la revendication 1, **caractérisé en ce que** l'autre borne du premier enroulement secondaire (421) est connectée à une première borne de conducteur de ligne (L1) et **en ce que** l'autre borne du second enroulement secondaire (422) est connectée à une seconde borne de conducteur de ligne (L2).

3. Dispositif d'alimentation électrique selon la revendication 2, **caractérisé en ce qu'**un condensateur (C1) est connecté entre l'autre borne du premier enroulement secondaire (421) et la première borne de conducteur de ligne (L1) et **en ce qu'**un condensateur (C2) est connecté entre l'autre borne du second enroulement secondaire (422) et la seconde borne de conducteur de ligne (L2).

4. Dispositif d'alimentation électrique selon l'une quelconque des revendications 1 à 3, **caractérisé en ce que** l'onduleur (3) est un pont en H comportant des transistors de puissance (31).

5. Dispositif d'alimentation électrique selon l'une quelconque des revendications 1 à 4, **caractérisé en ce que** le moyen d'alimentation électrique comprend un convertisseur de fréquence (1, 2, 3) et **en ce que** l'onduleur (3) fait partie du convertisseur de fréquence (1, 2, 3).

6. Réacteur destiné à fabriquer du polysilicium selon le procédé Siemens, comportant un premier dispositif d'alimentation électrique destiné à alimenter en courant alternatif des tiges ou des tiges fines de silicium, qui peuvent être disposées dans une enceinte de réacteur, pour les chauffer par induction, **caractérisé en ce que** le premier dispositif d'alimentation électrique est un dispositif d'alimentation électrique selon l'une quelconque des revendications 1 à 5.

7. Réacteur selon la revendication 6, **caractérisé en ce que** le réacteur comprend un second dispositif d'alimentation électrique destiné à alimenter en courant alternatif les tiges ou les tiges fines de silicium, pour les chauffer par induction, dans lequel une fréquence du courant alternatif pouvant être généré par le premier dispositif d'alimentation électrique est de 10 à 1000 kHz et une fréquence du courant alternatif pouvant être généré par le second dispositif d'alimentation électrique est de 10 à 100 Hz.
